# EUROPEAN PATENT APPLICATION

(11) **EP 1 206 116 A2**
(43) Date of publication of application: **15.05.2002**
(21) Application number: 01125493.5
(22) Date of filing: 06.11.2001
(51) Int. Cl.: H04N 1/21

(54) **Apparatus, method and program product for processing image**

(30) Priority: 09.11.2000 JP 2000342305
(71) Applicant: MATSUSHITA ELECTRIC INDUSTRIAL CO., LTD., Kadoma-shi, Osaka 571-8501 (JP)
(72) Inventor: Tsurube, Tomoyuki, Kawasaki-shi, Kanagawa-ken (JP); Nakamura, Norio, Ikoma-gun, Nara-ken (JP); Maeda, Shigenori, Katano-shi, Osaka-fu (JP)
(74) Representative: Balsters, Robert

(57) **Abstract**

An image processing apparatus (102) for processing a plurality of images recorded on a record medium (103) comprising: a user interface unit (101) for allowing a user to specify a plurality of the images to group the specified images into an image group and to designate each of the images as an image identifier, a grouping unit (107) for designating each of the image groups as a group identifier to produce group image information including the image identifiers of the grouped images for each of the group identifiers of the image groups; a list creating unit (104) for creating an image list listing the image identifiers and the group identifiers; and a recording unit (106) for recording the image list and the group image information on the record medium (103).

## Description

### BACKGROUND OF THE INVENTION

### 1. Field of the Invention

The present invention relates to an apparatus, a method and a program product for processing a plurality of images, and more specifically, to an apparatus, a method and a program product for processing a plurality of images to record the images on a record medium, and an apparatus, a method and a program product for processing a plurality of images recorded on a record medium to display the images on a display screen.

### 2. Description of the Related Art

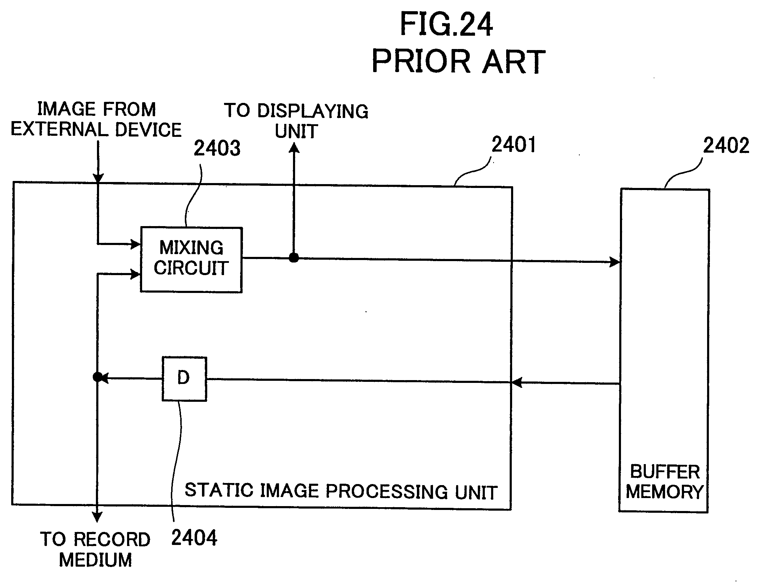

There have so far been proposed a wide variety of an image processing apparatus for processing a plurality of images to produce a composite image and then to record the images including the composite image on a record medium. Such typical image processing apparatus is disclosed in Japanese Non-examined Patent Publication No. H11-289490 that is adapted to process a predetermined static image and another image captured from a motion picture by a video camera to produce a composite image. Such conventional image processing apparatus comprises a static image processing unit 2401 and a buffer memory 2402 as shown in FIG. 24 of the drawings. The static image processing unit 2401 comprises an image mixing circuit 2403 and a D-latch circuit 2404.

The static image processing unit 2401 is adapted to input a static image from an external device, such as a video camera, not shown, to process the static image and a previously prepared static image to produce a composite image and to then record the composite image on a record medium, not shown. The buffer memory 2402 is electrically connected to the mixing circuit 2403 of the static image processing unit 2401 and capable of temporally storing therein the images including the predetermined static image and the composite image.

More specifically, the mixing unit 2403 of the static image processing unit 2401 is electrically connected to the external device and the D-latch circuit 2404 of the static image processing unit 2401, and adapted to input a first static image inputted from the external device and a second static image which is previously latched in and inputted from the D-latch circuit 2404 of the static image processing unit 2401, to process the first and second static images to produce a composite image to then output the composite image to the buffer memory 2402 and the displaying unit, not shown. The D-latch circuit 2404 of the static image processing unit 2401 is electrically connected to the buffer memory 2402 and adapted to input the image from the buffer memory 2402 and to latch the inputted image therein.

The operation of this conventional image processing circuit will be described hereinlater concretely. Firstly, the static image previously prepared and stored in the buffer memory 2402 is read out and then latched by the D-latch circuit 2404 of the static image processing unit 2401. Next, the static image latched in the D-latch circuit 2404 of the static image processing unit 2401 and another static image inputted from the external device are mixed by the image mixing unit 2403 of the static image processing unit 2401 to produce the composite image. The produced composite image is then written on the buffer memory 2402. The composite image is then read out from the buffer memory 2402 by the D-latch circuit 2404 of the static image processing unit 2401 and then latched in the D-latch circuit 2404 of the static image processing unit 2401. Thereafter the latched composite image is recorded on the record medium.

The conventional image processing apparatus, however, should record both the produced composite image and the previously recorded images on the record medium. The record medium needs a large storage area for both the produced composite image and the previously recorded images. The space area of the record medium is therefore reduced. As a result, sometimes the produced composite image should be recorded on another new record medium. In this case, the new record medium has no original image needed for the composite image. Accordingly, when the produced composite image would be read out from the record medium to display the composite image on the display screen, it is impossible to display the composite image on the display screen because there is no needed original image in the new record medium.

### SUMMARY OF THE INVENTION

It is therefore an object of the present invention to provide an image processing apparatus for processing a plurality of images recorded on a record medium, which can make good use of a storage capacity of the record medium and comes in very handy for displaying a plurality of images recorded on the record medium.

In accordance with a first aspect of the present invention, there is provided an image processing apparatus for processing a plurality of images recorded on a record medium comprising: image grouping means for allowing a user to specify a plurality of the images to group the specified images into an image group and to designate each of the images as an image identifier, group designating means for designating each of the image groups as a group identifier to produce group image information including the image identifiers of the grouped images for each of the group identifiers of the image groups; list creating means for creating an image list listing the image identifiers and the group identifiers; and recording means for recording the image list and the group image information on the record medium.

In the aforesaid image processing apparatus, the group designating means may be operated to allow the user to specify a display position at which each of the images is located on a display screen to produce position information on the display position for each of the image identifiers of the images in each of the image groups. The position information may be associated with the group image information to produce group information. Moreover, the recording means may be operated to record the group information on the record medium.

In the aforesaid image processing apparatus, the group designating means may be operated to allow the user to specify a displaying order for displaying the images in each of the image groups on a display screen, and to produce display information on the displaying order designated for the image identifiers of the images in each of the image groups. The display information maybe associated with the group image information to produce group information. Moreover, the recording means may be operated to record the group image information including the display information on the record medium.

In the aforesaid image processing apparatus, the group designating means may be operated to allow the user to specify an image size for displaying each of the images in each of the image groups on a display screen to produce display information on the display size designated for the image identifiers of the images in each of the image groups. The display information may be associated with the group image information to produce group information. Moreover, the recording means may be operated to record the group image information including the display information on the record medium.

In accordance with a second aspect of the present invention, there is provided an image processing apparatus for processing a plurality of images recorded on a record medium to display the image on a display screen of a displaying unit, the image having a predetermined image identifier, a plurality of the images being assigned as image groups each having a predetermined group identifier, the record medium having an image list including the image identifiers and the group identifiers, and group image information including the image identifiers of the grouped images for each of the group identifiers of the image groups, the image processing apparatus comprising: image reading out means for reading out the images and the group image information from the record medium, display controlling means for controlling the displaying unit to display the image list on the display screen of the displaying unit; and inputting means for allowing a user to select at least one of the image groups and images from among the image list displayed on the display screen of the displaying unit; wherein the display controlling means is operated to control the displaying unit on the basis of the group image information to display the images in the image group selected by the user and the images selected by the user on the display screen of the displaying unit.

In the aforesaid image processing apparatus, the group image information may have display position information on positions at which the images in each of the image groups are located on a display screen. The display controlling means may be operated to control the display unit to display the images of the selected image group located at the positions on the display screen on the basis of the display position information when one of the image groups is selected from among the image list by the inputting means.

In the aforesaid image processing apparatus, the group image information may have display information on a displaying order for displaying each of the images in each of the image groups on a display screen. The display controlling means may be operated to control the display unit to display the images of the selected image group in the displaying order on the display screen on the basis of the display information when one of the image groups is selected from among the image list by the inputting means.

In the aforesaid image processing apparatus, the group image information may have display information on an image size for displaying each of the images in each of the image groups on a display screen. The display controlling means may be operated to control the display unit to display the images of the selected image group in the image size on the display screen on the basis of the display information and a size of the display screen of the displaying unit when one of the image groups is selected from among the image list by the inputting means.

In accordance with a third aspect of the present invention, there is provided an image processing method of processing a plurality of images recorded on a record medium comprising the steps of:
(a) allowing a user to specify a plurality of the images to group the specified images into an image group and to designate each of the images as an image identifier;
(b) designating each of the image groups as a group identifier to produce group image information including the image identifiers of the grouped images for each of the group identifiers of the image groups;
(c) creating an image list listing the image identifiers and the group identifiers; and
(d) recording the image list and the group image information on the record medium.

The aforesaid image processing method may further comprise the step of allowing the user to specify a display position at which each of the images is located on a display screen to produce position information on the display position for each of the image identifiers of the images in each of the image groups. The step (d) may have the step of recording the group image information including the position information on the record medium.

The aforesaid image processing method may further comprise the steps of: allowing the user to specify a displaying order for displaying the images in each of the image groups on a display screen; and producing display information on the displaying order designated for the image identifiers of the images in each of the image groups. The step (d) may have the step of recording the group image information including the display information on the record medium.

The aforesaid image processing method may further comprise the step of allowing the user to specify an image size for displaying each of the images in each of the image groups on a display screen to produce display information on the display size designated for the image identifiers of the images in each of the image groups. The step (d) may have the step of recording the group image information including the display information on the record medium.

In accordance with a fourth aspect of the present invention, there is provided an image processing method of processing a plurality of images recorded on a record medium to display the image on a display screen of a displaying unit, the image having a predetermined image identifier, a plurality of the images being assigned as image groups each having a predetermined group identifier, wherein the image processing method comprises the steps of:
(a) preparing the record medium having a plurality of the images, the image list, and group image information including the image identifiers of the grouped images for each of the group identifiers of the image groups;
(b) reading out the image list and the group image information from the record medium;
(c) displaying the image list on the display screen of the displaying unit;
(d) allowing a user to select at least one of the image groups and images from among the image list displayed on the display screen of the displaying unit;
(e) reading out the images selected in the step (d) and the images of the image group selected in the step (d) from the record medium; and
(f) controlling the displaying unit on the basis of the group image information to display the images read out in the step (e) on the display screen of the displaying unit.

In the aforesaid image processing method, the group image information may have display position information on positions at which the images in each of the image groups located on a display screen. The step (f) may have the step of controlling the display unit to display the images of the selected image group located at the positions on the display screen on the basis of the display position information when one of the image groups is selected from among the image list in the step (d).

In the aforesaid image processing method, the group image information may have display information on a displaying order for displaying the images in each of the image groups on a display screen. The step (f) may have the step of controlling the display unit to display the images of the selected image group in the displaying order on the display screen on the basis of the display information when one of the image groups is selected from among the image list in the step (d).

In the aforesaid image processing method, the group image information may have display information on an image size for displaying the images in each of the image groups on a display screen. The step (f) may have the step of controlling the display unit to display the images of the selected image group in the image size on the display screen on the basis of the display information and a size of the display screen of the displaying unit when one of the image groups is selected from among the image list in the step (d).

In accordance with a fifth aspect of the present invention, there is provided a computer program product comprising a computer usable storage medium having computer readable code embodied therein for processing a plurality of images recorded on a record medium, wherein the computer readable code comprising:
a first program product code for allowing a user to specify a plurality of the images to group the specified images into an image group and to designate each of the images as an image identifier;
a second program product code for designating each of the image groups as a group identifier to produce group image information including the image identifiers of the grouped images for each of the group identifiers of the image groups;
a third program product code for creating an image list listing the image identifiers and the group identifiers; and
a fourth program product code for recording the image list and the group image information on the record medium.

In the aforesaid computer program product, the computer readable code may further comprise a fifth program product code for allowing the user to specify a display position at which each of the images is located on a display screen to produce position information on the display position for each of the image identifiers of the images in each of the image groups. The fourth program product code may have the program product code for recording the group image information including the position information on the record medium.

In the aforesaid computer program product, the computer readable code may further comprise a sixth program product code for allowing the user to specify a displaying order for displaying the images in each of the image groups on a display screen to produce display information on the displaying order designated for the image identifiers of the images in each of the image groups. The fourth program product code may have a program product code for recording the group image information including the display information on the record medium.

In the aforesaid computer program product, the computer readable code may further comprise a sixth program product code for allowing the user to specify an image size for displaying the images in each of the image groups on a display screen to produce display information on the image size designated for the image identifiers of the images in each of the image groups. The fourth program product code may have a program product code for recording the group image information including the display information on the record medium.

In accordance with a sixth aspect of the present invention, there is provided a computer program product comprising a computer usable storage medium having computer readable code embodied therein for processing a plurality of images recorded on a record medium, the record medium having a plurality of the images, the image list, and group image information including the image identifiers of the grouped images for each of the group identifiers of the image groups, wherein the computer readable code comprising:
a first program product code for reading out the image list and the group image information from the record medium;
a second program product code for displaying the image list on the display screen of the displaying unit;
a third program product code for allowing a user to select at least one of the image groups and images from among the image list displayed on the display screen of the displaying unit;
a fourth program product code for reading out the images selected by the third program product code and the images of the image group selected by the third program product code from the record medium; and
a fifth program product code for controlling the displaying unit on the basis of the group image information to display the images read out by the fourth program product code on the display screen of the displaying unit.

In the aforesaid computer program product, the group image information may have display position information on positions at which the images in each of the image groups are located on a display screen. The fifth program product code may have a sixth program product code for displaying the images of the selected image group located at the positions on the display screen on the basis of the display position information when one of the image groups is selected from among the image list by the fourth program product code.

In the aforesaid computer program product, the group image information may have display information on a displaying order for displaying the images in each of the image groups on a display screen. The fifth program product code may have a sixth program product code for displaying the images of the selected image group in the displaying order on the display screen on the basis of the display information when one of the image groups is selected from among the image list by the fourth program product code.

In the aforesaid computer program product, the group image information may have display information on an image size for displaying the images in each of the image groups on a display screen. The fifth program product code may have a sixth program product code for displaying the images of the selected image group in the image size on the display screen on the basis of the display information and a size of the display screen of the displaying unit when one of the image groups is selected from among the image list by the fourth program product code.

In the aforesaid image processing apparatus, the image may be a static image.

In the aforesaid image processing method, the image may be a static image.

In the aforesaid computer program product, the image may be a static image.

### BRIEF DESCRIPTION OF THE DRAWINGS

The features and advantages of the image processing apparatus, method and program product according to the present invention will be more clearly understood from the following description taken in conjunction with the accompanying drawings in which:
FIG. 1 is a schematic block diagram of a first preferred embodiment of the image processing apparatus according to the present invention;
FIG. 2 is a schematic diagram of an example of image identifiers of the static images to be processed by the image processing apparatus shown in FIG. 1;
FIG. 3 is a schematic diagram of an example of group image information in the image processing apparatus shown in FIG. 1;
FIG. 4 is a schematic diagram of an example of the image list in the image processing apparatus shown in FIG. 1;
FIG. 5 is a partial block diagram of a second embodiment of the image processing apparatus according to the present invention;
FIG. 6 is a block diagram of an example of the display screen, on which a plurality of static images are displayed, in the second embodiment of the image processing apparatus shown in FIG. 5;
FIG. 7 is a block diagram of an example of the group information in the second embodiment of the image processing apparatus shown in FIG. 5;
FIG. 8 is a partial block diagram of a third embodiment of the image processing apparatus according to the present invention;
FIG. 9 is a block diagram of an example of the group information in the third embodiment of the image processing apparatus shown in FIG. 8;
FIG. 10 is a block diagram of another example of the display information on the displaying order in third embodiment of the image processing apparatus shown in FIG. 8;
FIG. 11 is a schematic block diagram of a fourth preferred embodiment of the image processing apparatus according to the present invention;
FIG. 12 is a block diagram of an example of the display screen in the fourth embodiment of the image processing apparatus shown in FIG. 11;
FIG. 13 is a partial block diagram of a fifth embodiment of the image processing apparatus according to the present invention;
FIG. 14 is a partial block diagram of a sixth embodiment of the image processing apparatus according to the present invention;
FIG. 15 is a block diagram of a first example of the operation of displaying the static images on the display screen in the sixth embodiment of the image processing apparatus shown in FIG. 14;
FIG. 16 is a block diagram of a second example of the operation of displaying the static images on the display screen in the sixth embodiment of the image processing apparatus shown in FIG. 14;
FIG. 17 is a block diagram of a third example of the operation of displaying the static images on the display screen in the sixth embodiment of the image processing apparatus shown in FIG. 14;
FIG. 18 is a flowchart of the process in a seventh preferred embodiment of the image processing method according to the present invention;
FIG. 19 is a flowchart of the process in an eighth preferred embodiment of the image processing method according to the present invention;
FIG. 20 is a flowchart of the process in a ninth preferred embodiment of the image processing method according to the present invention;
FIG. 21 is a flowchart of the process in a tenth preferred embodiment of the image processing method according to the present invention;
FIG. 22 is a flowchart of the process in an eleventh preferred embodiment of the image processing method according to the present invention;
FIG. 23 is a flowchart of the process in a twelfth preferred embodiment of the image processing method according to the present invention; and
FIG. 24 is a block diagram of the conventional image processing apparatus.

### DESCRIPTION OF THE PREFERRED EMBODIMENTS

Throughout the following detailed description, similar reference characters and numbers refer to similar elements in all figures of the drawings.

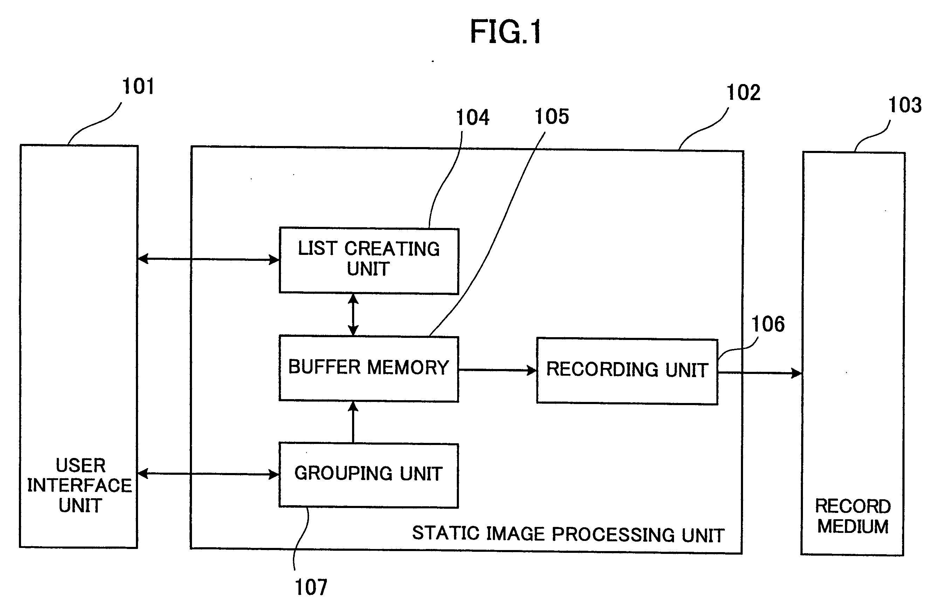

Referring now to FIGS. 1 through 4 of the drawings, a first preferred embodiment of the image processing apparatus according to the present invention will be explained hereinafter.

As shown in FIG. 1, the image processing apparatus according to the present invention comprises a user interface unit 101, a static image processing unit 102, and a record medium 103.

The user interface unit 101 is electrically connected to the static image processing unit 102, and adapted to allow a user to interactively operate the static image processing unit 102 to issue an instruction to the static image processing unit 102. The user interface 101 may be preferably a keyboard, a mouse, a button, a switch, a lever, and so on.

The user interface 101 further has a display screen for displaying the static images and a diversity of information on the static images. The user interface 101 may be preferably a liquid crystal displaying panel, a cathode-ray tube displaying unit, and so on.

The static image processing unit 102 is adapted to accept the instruction from the user interface unit 101 and to then operate as described blow in accordance with the instruction received from the user interface unit 101. Therefore, the user can interactively operates the static image processing unit 102.

The static image processing unit 102 is further electrically connected to the record medium 103 and is designed to process and display a plurality of static images on the displaying screen of the user interface unit 101 and to record the static images and a diversity of information on the static images onto the record medium 103 in accordance with the instruction from the user interface unit 101.

The static image processing unit 102 comprises a list creating unit 104, a buffer memory 105, a recording unit 106, and a grouping unit 107.

The grouping unit 107 of the static image processing unit 102 is electrically connected to the user interface unit 101 and operates in accordance with the instruction from the user interface unit 101. The user interface 101 is operable to allow the user to specify a plurality of static images to group the specified static images into an image group. The grouping unit 107 is adapted to designate each of the static images as an image identifier and to designate each of the image groups specified by the user interface 101 as a group identifier. The grouping unit 107 is further designed to produce group image information on the image identifiers and the group identifiers associated with each other. The grouping unit 107 is further electrically connected to the buffer memory 105, and adapted to temporally store the group image information as group information in the buffer memory 105. The grouping unit 107 is therefore operable to sort the static images by the image group with the image identifiers and the group identifiers.

The list creating unit 104 of the static image processing unit 102 is electrically connected to the user interface unit 101 and operates in accordance with the instruction from the user interface unit 101. The list creating unit 104 is designed to create an image list listing the image identifiers and the group identifiers in order to refer the static images recorded on the record medium 103. This image list may be displayed on the display screen of the user interface unit 101.

In the static image processing unit 102, the buffer memory 105 is electrically connected to the list creating unit 104 and the grouping unit 107. The buffer memory 105 is capable of temporally storing the image list created by the list creating unit 104, the group information including the group image information produced by the grouping unit 107, and the other information therein.

The record medium 103 is electrically connected to the recording unit 106 of the static image processing unit 102. The record medium 103 is capable of recording data of the static images, the image list, group information including the group image information, and another information, which will be described hereinlater in detail, thereon. The record medium 103 may be preferably a memory card and so on.

In the static image processing unit 102, the recording unit 106 is electrically connected to the buffer memory 105. The recording unit 106 is adapted to read out the image list, the group information including the group image information and the other information from the buffer memory 105 and to record the image list, the group information including the group image information and the other information read out from the buffer memory 105 on the record medium 103.

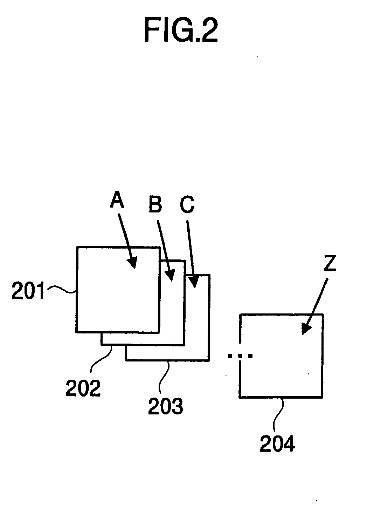

Each of the static images recorded on the record medium 103 is previously denoted by an image identifier for identifying the static image. In this embodiment, the image identifiers may be indicated, but not limited to, by letters of alphabet, e.g., "A", "B", "C", ..., and "Z". In FIG. 2, the static images 201, 202, 203 and 204 are indicated by characters of alphabet "A", "B", "C", and "Z", respectively, as the image identifiers. The image identifiers may be indicated by file names, symbols, or the like.

Furthermore, each of the image groups including a plurality of static images is previously denoted by the group identifier by the grouping unit 107. In this embodiment, the group identifiers may be indicated, but not limited to, by numeric characters, e.g., "1", "2", "3", and so on.

The image identifiers and the group identifiers should not overlap with each other. The group identifiers may be a character string having a series of image identifiers, e.g., "DKNPQ...VX".

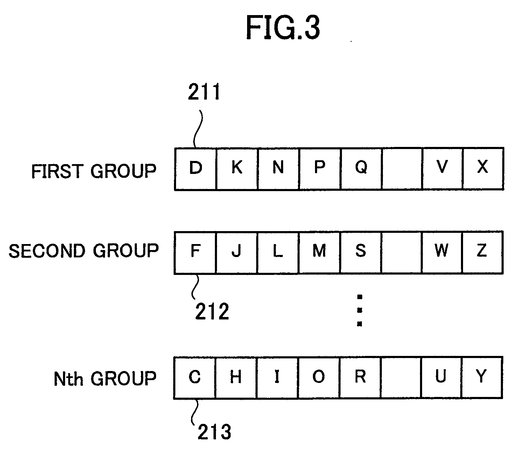

The image group is specified by the image identifiers of the static images. There is shown in FIG. 3 an example of the group image information on a plurality of image groups, e.g., a first image group 211, a second image group 212, ..., and an Nth image group 213. In this embodiment, the first image group 211 has the static images designated by the image identifiers "D", "K", "N", "P", "Q", ..., "V" and "X". The second image group 212 has the static images designated by the image identifiers "F", "J", "L", "M", "S", ..., "W" and "Z". The Nth image group 213 has the static images designated by the image identifiers "C", "H", "I", "O", "R", ..., "U" and "Y".

The image list lists the group identifiers and the image identifiers for referring the static images recorded on the record medium. Each of the image identifiers is described in the image list when only a single static image corresponding to the image identifier, for example, "A", "B", "E" and "G", is displayed on a single display screen of the displaying unit, not shown, of the user interface unit 101. Each of the group identifiers is described in the image list when a plurality of static images included in each of the image groups, for example, the first image group "1" or the second image group "2", are displayed on a single display screen of the displaying unit.

The operation of the image processing apparatus according to the present invention thus constructed will be described in detail hereinlater.

In case where a plurality of static images would be displayed as an album on a single display screen of the displaying unit, the user should operate the user interface unit 101 to specify a plurality of static images to be grouped into each of the image groups including the first image group 211, the second image group 212, ..., and the Nth image group 213. Each of the static images recorded on the record medium 103 is then designated by the image identifier by the grouping unit 107 of the static image processing unit 102. The each of the image groups including the first image group 211, the second image group 212, ..., and the Nth image group 213, as shown in FIG. 3, is designated by a group identifier by the grouping unit 107 of the static image processing unit 102. The group image information including the group identifier of the group selected by the user is produced by the grouping unit 107 of the static image processing unit 102 in accordance with the instruction from the user interface unit 101.

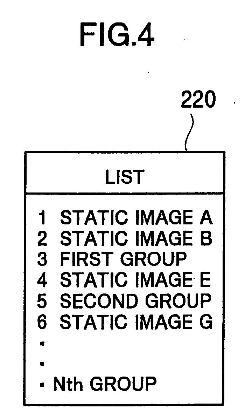

The image list is created by the list crating unit 104 of the static image processing unit 102 in accordance with the user interface 101. The image list 220 is then displayed on the display screen of the displaying unit for displaying the static images, as shown in FIG. 4.

The group image information created by the grouping unit 107 of the static image processing unit 102 and the image list created by the list crating unit 104 of the static image processing unit 102 are temporally stored in the buffer memory 105 of the static image processing unit 102 and then recorded on the record medium 103 by the recording unit 106 of the static image processing unit 102.

It will be understood from the above description of the first embodiment that the image processing apparatus according to the present invention has an advantage over the conventional image processing apparatus in making good use of a narrow storage capacity of the record medium, because of the fact that it is unnecessary for the image processing apparatus according to the present invention to record new composite images having a large volume on the record medium. Furthermore, the image processing apparatus according to the present invention is operable to select one from among the static images and the image groups to be displayed on a single display screen without restraint whether a single image is displayed on a single display screen or a plurality of images are displayed together on a single display screen.

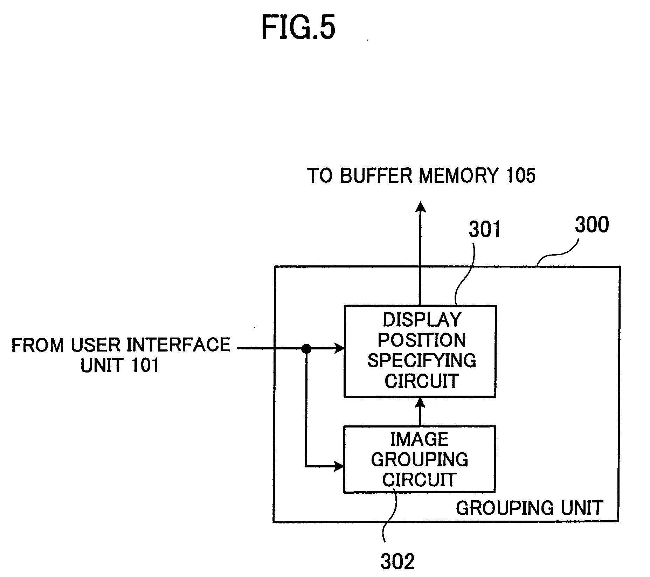

Referring to FIG. 5 of the drawings, there is shown a partial diagram view of a second preferred embodiment of the image processing apparatus according to the present invention.

In this embodiment, the static image processing unit 102 comprises the same constitutional elements as those of the first embodiment of the static image processing unit 102 shown in FIG. 1 except for the grouping unit 107, and a grouping unit 300 which is replaced as the grouping unit 107 of the first embodiment of the static image processing unit 102 shown in FIG. 1. The description of the same constitutional elements will be thus omitted from the following description.

As shown in FIG. 5, the grouping unit 300 of the static image processing unit 102 comprises a display position specifying circuit 301 and an image grouping circuit 302.

The image grouping circuit 302 is electrically connected to the user interface unit 101 and designed to sort the static images by the image identifiers within the image group selected by the user in accordance with the instruction from the user interface unit 101.

The display position specifying circuit 301 is electrically connected to the user interface unit 101 and the image grouping circuit 302. The display position specifying circuit 301 is designed to specify a display position in accordance with the instruction from the user interface unit 101. The display position is indicated where each of the static images of the image group sorted by the image grouping circuit 302 is located on the display screen of the displaying unit.

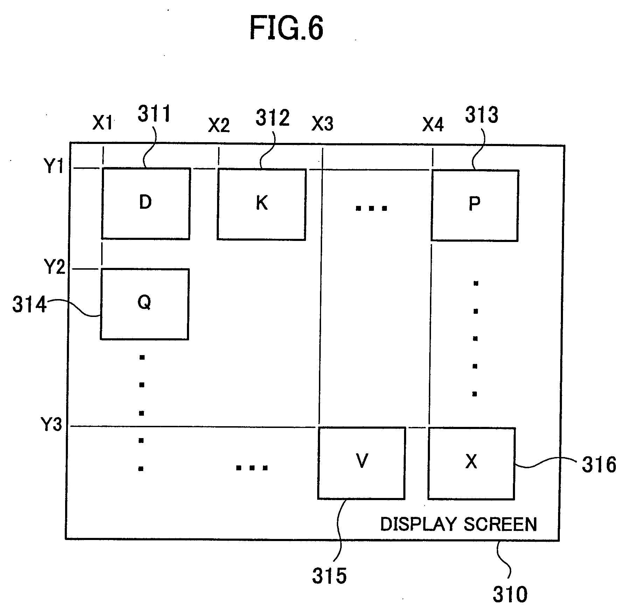

The display position is designated by a horizontal position, e.g., x-coordinate, and a vertical position, e.g., y-coordinate, within the display screen, as shown in FIG. 6. There is shown in FIG. 6 an example of the display screen 310 of the displaying unit. The display screen 310 has a plurality of static images 311, 312, ..., 313, 314, ..., 315, and 316 having the image identifiers "D", "K", ..., "P", "Q", ..., "V", and "X", respectively, displayed thereon. For example, the upper left corner of the static image 311 is located on the display position at coordinates (x1, y1) in FIG. 6. In this embodiment, the display position is designated by, but not limited to, the coordinates of the upper left corner of the static image.

The display position specifying circuit 301 is further designed to produce position information including the display position for each of the static images in the image group. The display positions in the position information are associated with the corresponding image identifiers, respectively, and contained in the group information. The group information is temporally stored in the buffer memory 105 of the static image processing unit 102. Thereafter the group information is then recorded on the record medium 103 by the recording unit 106 of the static image processing unit 102.

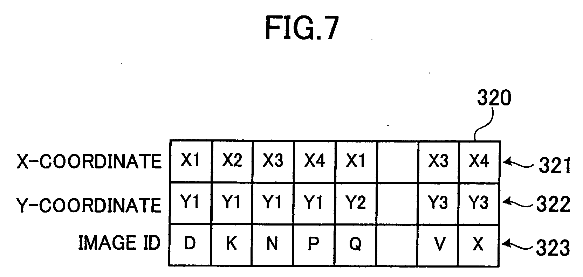

Referring to FIG. 7 of the drawings, there is shown an example of the group information in this embodiment. The group information 320 includes the group image information including the image identifiers 323, and the position information including the x-coordinate 321 and y-coordinate 322 of the display position for each of static images of the image group.

The operation of the image processing apparatus according to the present invention thus constructed will be described in detail hereinlater.

The static images recorded on the record medium 103 are selected by the user in order to group the selected static images into an image group. In this embodiment, as shown in FIG. 7, the static images having the image identifiers "D", "K", "N", "P", "Q", ..., "V", and "X" are selected for a single image group by the user. The selected static images are sorted by the image grouping circuit 302 of the grouping unit 300 in accordance with the instruction from the user interface unit 101. The display positions of the selected static images are respectively specified by the user.

The position information is produced by the display position specifying circuit 301 of the grouping unit 300 on the basis of the specified display positions of the selected static images. In the position information 320 of the group information, the display position of each static image is associated with the corresponding image identifier 323 as shown in FIG. 7. For example, the display position of the static image having the image identifier "D" is designated by the coordinates (x1, y1), and the display position of the static image having the image identifier "V" is designated by the coordinates (x3, y3). The position information is thus associated with the group image information and then temporally stored as the group information in the buffer memory 105 of the static image processing unit 102.

It will be understood from the above description of the second embodiment that the image processing apparatus according to the present invention has an advantage over the conventional image processing apparatus in making good use of a narrow storage capacity of the record medium even when a plurality of images would be displayed at predetermined positions on a single display screen of the displaying unit, because of the fact that the image processing apparatus according to the present invention is operable to determine the position information on the positions of a plurality of images, having a small volume, to record the position information and the images, but there is no need to record new composite images on the record medium. Furthermore, the image processing apparatus according to the present invention is operable to then read out the images from the record medium to display the plurality of images at the positions on a single display screen of the displaying unit, thereby making it possible to reduce the needed capacity of the record medium.

Furthermore, it is easy for the image processing apparatus according to the present invention to change the positions for displaying the images on the display screen of the displaying unit.

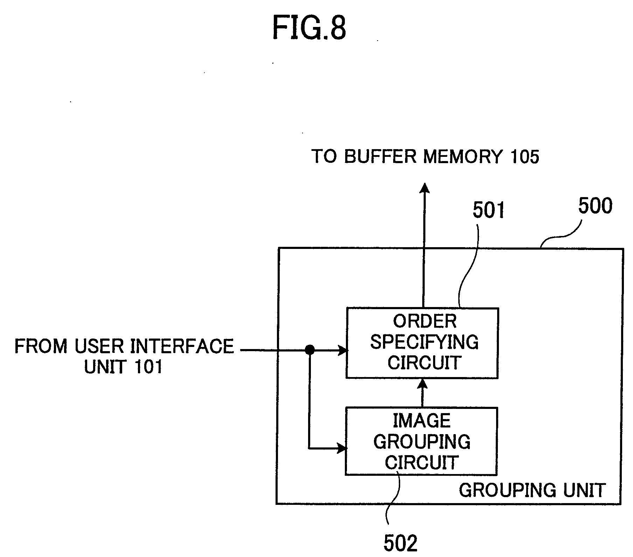

Referring to FIG. 8 of the drawings, there is shown a partial diagram view of a third preferred embodiment of the image processing apparatus according to the present invention.

In this embodiment, the static image processing unit 102 comprises the constitutional elements same as those of the first embodiment of the static image processing unit 102 shown in FIG. 1 except for the grouping unit 107, and a grouping unit 500 which is replaced as the grouping unit 107 of the first embodiment of the static image processing unit 102 shown in FIG. 1. The description of the same constitutional elements will be thus omitted from the following description.

As shown in FIG. 8, the grouping unit 500 of the static image processing unit 102 comprises a display order specifying circuit 501 and an image grouping circuit 502.

The image grouping circuit 502 is electrically connected to the user interface unit 101 and designed to sort the static images by the image identifiers within the image group selected by the user in accordance with the instruction from the user interface unit 101.

The display order specifying circuit 501 is electrically connected to the user interface unit 101 and the image grouping circuit 502. The display order specifying circuit 501 is designed to specify a displaying order for displaying the static images in the image group in accordance with the instruction from the user interface unit 101. Here, the displaying order is indicative of an order for displaying the static images in the image group sorted by the image grouping circuit 502 on the display screen of the displaying unit.

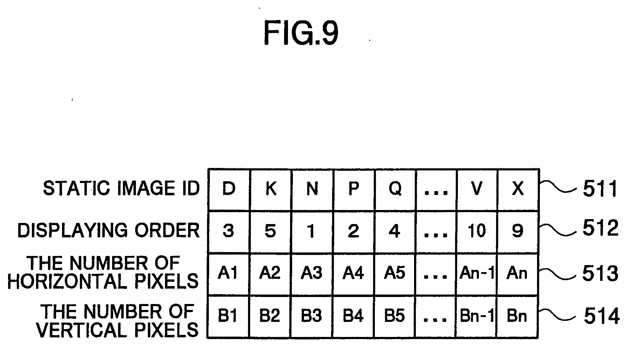

As shown in FIG. 9, the displaying order 512 is designated by a serial number for the image identifiers of the static images in the image group in this embodiment. The display order specifying circuit 501 is further designed to produce display information including the displaying order for each of the static images in the image group. The numbers of the displaying order 512 in the display information are associated with the corresponding image identifiers 511, respectively, and contained in the group information as shown in FIG. 9. The group information is temporally stored in the buffer memory 105 of the static image processing unit 102. Thereafter the group information is then recorded on the record medium 103 by the recording unit 106 of the static image processing unit 102.

Furthermore, the display order specifying circuit 501 may be designed to specify an image size in accordance with the instruction from the user interface unit 101. Here, the image size is indicative of a size for displaying each of the static images in the image group sorted by the image grouping circuit 502 on a display screen of the displaying unit.

As shown in FIG. 9, the image size of each of the static images is designated by the number of horizontal pixels 513 and the number of vertical pixels 514. The display order specifying circuit 501 is designed to produce the display information including the image size for each of the static images in the image group. The number of horizontal pixels 513 and the number of vertical pixels 514 of the static images are associated with the corresponding image identifiers 511, respectively, and contained in the group information as shown in FIG. 9. The group information is temporally stored in the buffer memory 105 of the static image processing unit 102. Thereafter the group information is then recorded on the record medium 103 by the recording unit 106 of the static image processing unit 102.

The operation of the image processing apparatus according to the present invention thus constructed will be described in detail hereinlater.

The static images recorded on the record medium 103 are selected by the user in order to group the selected static images into an image group. In this embodiment, as shown in FIG. 9, the static images having the image identifiers "D", "K", "N", "P", "Q", ..., "V", and "X" are selected for a single image group by the user. The selected static images are sorted by the image grouping circuit 502 of the grouping unit 500 in accordance with the instruction from the user interface unit 101. The displaying order of the selected static images is further specified by the user.

The display information is produced by the display order specifying circuit 501 of the grouping unit 500 on the basis of the specified displaying order of the selected static images. In the displaying order 512 of the group information, the displaying order of the static images is associated with the corresponding image identifiers 511 as shown in FIG. 9. For example, the displaying order 511 of the static images in the image group is determined as "N", "P", "D", "Q", "K", ...,"X", and "V" in this embodiment.

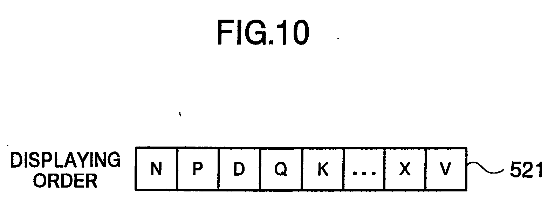

Referring to FIG. 10 of the drawings, there is another example of the display information including the displaying order determined by the display order specifying circuit 501 of the grouping unit 500. The displaying order 521 of the static images in the image group is determined on the basis of their addresses stored in the buffer memory 105. The symbols of the image identifiers may be rearranged to specify the displaying order of the static images.

Furthermore, the image sizes of the static images in the image group are specified by the user. The display information is produced by the display order specifying circuit 501 of the grouping unit 500 on the basis of the specified image sizes of the selected static images. In the group information, the image sizes 513 and 514 of the static images are associated with the corresponding image identifiers 511 as shown in FIG. 9.

In this embodiment, the image sizes are designated by the number of horizontal pixels 513 and the number of vertical pixels 514. For example, the static image having the image identifier "D" has the image size indicated that the number of horizontal pixels 513 is "A1" and the number of vertical pixels 514 is "B1". These image sizes 513 and 514 are associated with the corresponding image identifier "D" and contained in the group information. The group information is then temporally stored in the buffer memory 105.

It is easy for the above embodiment of the image processing apparatus according to the present invention to selectively control the displaying unit on the basis of a size of its display screen and the image size to display a plurality of images as an album together on a single large display screen of the displaying unit or to display a plurality of images one by one in turn as slide shows on a single small display screen of the displaying unit.

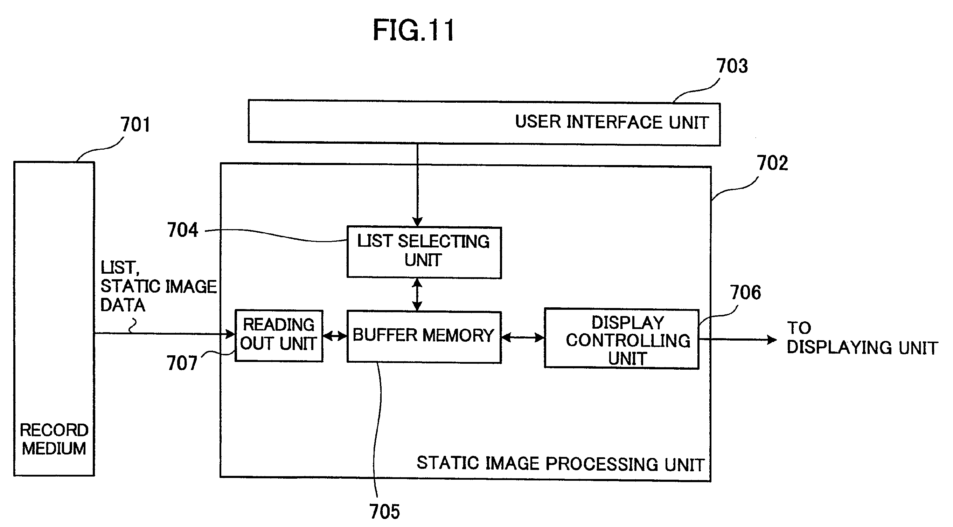

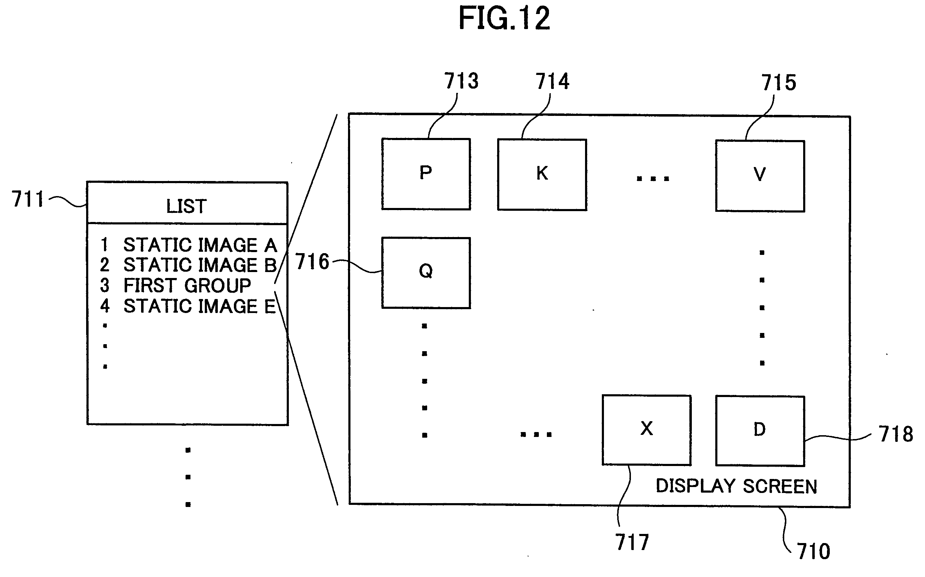

Referring to FIGS. 11 and 12 of the drawings, a fourth preferred embodiment of the image processing apparatus according to the present invention will be explained hereinlater.

As shown in FIG. 11, the image processing apparatus according to the present invention comprises a record medium 701, a static image processing unit 702 and a user interface unit 703. The static image processing unit 702 comprises a list selecting unit 704, a buffer memory 705, a display controlling unit 706, and a reading out unit 707.

The static image processing unit 702 is electrically connected to the user interface unit 703 and adapted to accept an instruction from the user interface unit 703 and to then operate as described below in accordance with the instruction received from the user interface unit 703. Therefore, the static image processing unit 702 can interactively operates. The static image processing unit 702 is further electrically connected to the record medium 701 and is designed to read out and process an image previously recorded on the record medium 701 in accordance with the instruction from the user interface unit 703.

The record medium 701 is electrically connected to the recording out unit 707 of the static image processing unit 702. The record medium 701 is capable of recording data of a plurality of static images, the image list, the group information, and another information, thereon. The record medium 701 may be preferably a memory card and so on. The image list and the group information recorded on the record medium 701 are the same as those of the record medium 103 of the first embodiment of the static image processing unit 102 shown in FIG. 1. Therefore, the detailed description of the image list and the group information will be thus omitted from the following description.

The user interface unit 703 is electrically connected to the list selecting unit 704 of the static image processing unit 702 and designed to allow a user to operate the static image processing unit 702 thereby, and to select one of the static images and the image groups from among the image list. The user may operate the image processing apparatus while the user sees the image list displayed on the display screen of the displaying unit. The user interface unit 703 is adapted to transmit the selected result to the list selecting unit 704 of the static image processing unit 702. The user interface unit 703 may be preferably a keyboard, a mouse, a button, a switch, a lever, and so on.

The reading out unit 707 of the static image processing unit 702 is electrically connected to the buffer memory 705 of the static image processing unit 702. The reading out unit 707 of the static image processing unit 702 is adapted to read out data from the record medium 701.

In the static image processing unit 702, the buffer memory 705 is electrically connected to the list selecting unit 704, the display controlling unit 706 and the reading out unit 707. The buffer memory 705 is capable of temporally storing therein the image list, the group information, the static images, and the other information, which are read out from the record medium 701 by the reading out unit 707.

The list selecting unit 704 of the static image processing unit 702 is electrically connected to the user interface unit 703 and the buffer memory 705 of the static image processing unit 702. The list selecting unit 704 is designed to receive the selected result from the user interface unit 703. The selected result received from the user interface unit 703 is indicative of one of the static images and the image groups in the image list displayed on the display screen of the displaying unit. The list selecting unit 704 of the static image processing unit 702 is further designed to derive the image identifiers of the static images to be displayed on the display screen of the displaying unit from the group information, and then to transmit, to the buffer memory 705 of the static image processing unit 702, the instruction for the static images to be displayed on the display screen of the displaying unit.

The display controlling unit 706 of the static image processing unit 702 is electrically connected to the buffer memory 705 of the static image processing unit 702 and the external displaying unit. The display controlling unit 706 of the static image processing unit 702 is adapted to control the displaying unit to display the image list on the display screen, and to control the displaying unit to selectively display, on the display screen, the static images in the image group or the static image selected by the instruction from the list selecting unit 704.

The operation of the image processing apparatus according to the present invention thus constructed will be described in detail hereinlater with reference to FIGS. 11 and 12 of the drawings.

The image list and the group information are read out from the record medium 701 by the reading out unit 707 of the static image processing unit 702. The read out image list and group information are temporally stored in the buffer memory 705 of the static image processing unit 702. The display controlling unit 706 is operated to instruct the displaying unit to display the image list on its display screen.

More specifically, as shown in FIG. 12, the image list 711 including the static image "A", the static image "B", the first image group, the static image "E" and so on, is displayed on the display screen of the displaying unit. At this time, the user can operate the user interface unit 703 to select one item, for example, one of the static images "A", "B", and "E", or one of the image groups, e.g., the first image group, from the image list 711 displayed on the display screen of the displaying unit.

When the user selects the static image "E" from the image list 711, the selected result is then transmitted from the user interface unit 703 to the list selecting unit 704 of the static image processing unit 702. The instruction for the static image to be displayed on the display screen of the displaying unit is then transmitted from the list selecting unit 704 of the static image processing unit 702 to the buffer memory 705 of the static image processing unit 702.

When, on the other hand, the user selects the first image group from the image list 711, the selected result is then transmitted from the user interface unit 703 to the list selecting unit 704 of the static image processing unit 702. The static images in the first image group are derived from the group information by the list selecting unit 704. The instruction for the static images in the first image group to be displayed on the display screen of the displaying unit is then transmitted from the list selecting unit 704 of the static image processing unit 702 to the buffer memory 705 of the static image processing unit 702.

The static images specified by the selected result are read out from the record medium 701 by the reading out unit 707 of the static image processing unit 702. Thereafter the display controlling unit 706 of the static image processing unit 702 is operated to output the read out static images to be displayed on the display screen of the displaying unit.

When a single static image, i.e., the static image "A", "B", or "E", is selected from the image list 711, the display controlling unit 706 is operated to output a single static image selected by the user interface unit 703 to the displaying unit. When, on the other hand, the image group, e.g., the first image group, is selected from the image list 711, the display controlling unit 706 is operated to control the displaying unit to display a plurality of static images having the image identifiers "D", "K", ..., "P", "Q", ..., "V", and "X", in the first image group selected by the user interface unit 703 on its display screen 710 as shown in FIG. 12.

It will be understood from the above description of the fourth embodiment that the image processing apparatus according to the present invention has an advantage over the conventional image processing apparatus in making good use of a narrow storage capacity of the record medium, because of the fact that it is unnecessary for the image processing apparatus according to the present invention to previously record composite images on the record medium.

Furthermore, the image processing apparatus according to the present invention is operable to select one from among the static images and the image groups to be displayed on a single display screen without restraint whether a single image is displayed on a single display screen or a plurality of images are displayed together on a single display screen.

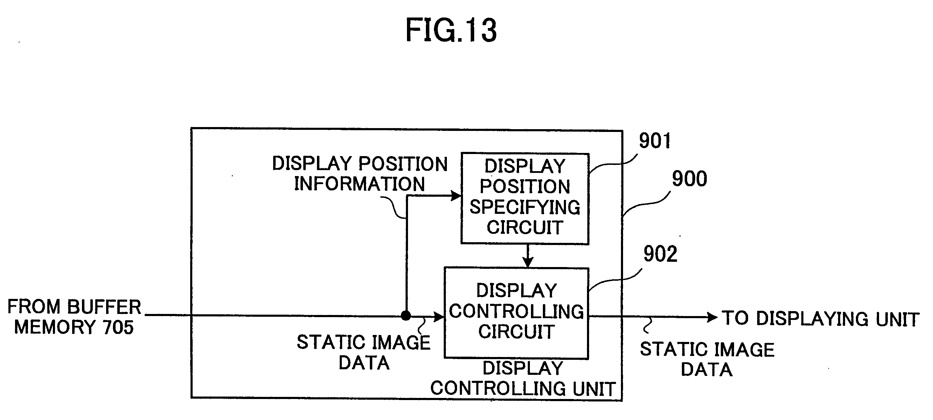

Referring to FIG. 13 of the drawings, there is shown a partial diagram view of a fifth preferred embodiment of the image processing apparatus according to the present invention.

In this embodiment, the static image processing unit 702 comprises the constitutional elements same as those of the fourth embodiment of the static image processing unit 702 shown in FIG. 11 except for the display controlling unit 706, and a display controlling unit 900 which is replaced as the display controlling unit 706 of the fourth embodiment of the static image processing unit 702 shown in FIG. 11. The description of the same constitutional elements will be thus omitted from the following description.

As shown in FIG. 13, the display controlling unit 900 comprises a display position specifying circuit 901 and a display controlling circuit 902. The display position specifying circuit 901 of the display controlling unit 900 is electrically connected to the buffer memory 705 of the static image processing unit 702. The display position specifying circuit 901 of the display controlling unit 900 is adapted to derive the display position information from the group information transmitted from the buffer memory 705 to specify display positions at which the static images in each of the image groups located on the display screen of the displaying unit on the basis of the display position information.

The display controlling circuit 902 of the display controlling unit 900 is electrically connected to the display position specifying circuit 901 and the buffer memory 705 of the static image processing unit 702. The display controlling circuit 902 of the display controlling unit 900 is adapted to control the displaying unit to display the static images of the selected image group at the display positions on the display screen of the displaying unit when one of the image groups is selected from among the image list by the user.

The operation of the image processing apparatus according to the present invention thus constructed will be described in detail hereinlater.

In this embodiment, the display positions are derived from the group information transmitted from the buffer memory 705 of the static image processing unit 702 by the display position specifying circuit 901 of the display controlling unit 900. For example, as shown in FIG. 7 of the drawings, the x-coordinates 321 and the y-coordinates 322 for the static images having the image identifiers "D", "K", "N", "P", "Q", ..., "V" and "X", in the selected image group are derived from the group information 320 by the display position specifying circuit 901 of the display controlling unit 900.

More specifically, the x-coordinate "x1" and the y-coordinate "y1" for the static image "D" are derived from the display information and then inputted from the buffer memory 705 of the static image processing unit 702 to the display position specifying circuit 901 of the display controlling unit 900. The x-coordinate "x2" and the y-coordinate "y1" for the static image "K" are also derived from the display information and then inputted from the buffer memory 705 of the static image processing unit 702 to the display position specifying circuit 901 of the display controlling unit 900.

On the basis of the inputted x- and y-coordinates (x1, y1) for the static image having the image identifier "D", the display controlling circuit 902 of the display controlling unit 900 is control the displaying unit to display the static image 311 on the display screen 310 as shown in FIG. 6 of the drawings.

Similarly, the static image 312 having the image identifier "K" is displayed on the display screen 310 at the position indicative of the x- and y-coordinates (x2, y1). The static image 313 having the image identifier "P" is displayed on the display screen 310 at the position indicative of the x- and y-coordinates (x4, y1). The static image 314 having the image identifier "Q" is displayed on the display screen 310 at the position indicative of the x- and y-coordinates (x1, y2). The static image 315 having the image identifier "V" is displayed on the display screen 310 at the position indicative of the x- and y-coordinates (x3, y3). The static image 316 having the image identifier "X" is displayed on the display screen 310 at the position indicative of the x- and y-coordinates (x4, y3).

It will be understood from the above description of the above embodiment that the image processing apparatus according to the present invention has an advantage over the conventional image processing apparatus in making good use of a narrow storage capacity of the record medium when a plurality of images are displayed at predetermined positions on a single display screen of the displaying unit, because of the fact that the image processing apparatus according to the present invention is operable to read out the images and the predetermined display positions from the record medium to display the plurality of images at the predetermined display positions on a single display screen of the displaying unit, thereby making it possible to reduce the needed capacity of the record medium.

Furthermore, it is easy for the image processing apparatus according to the present invention to change the positions for displaying the images on the display screen of the displaying unit.

Moreover, even when the composite image is displayed on the display screen of the displaying unit and the original images are further displayed on the display screen of the displaying unit, there is no need to read out the original images from the record medium once more.

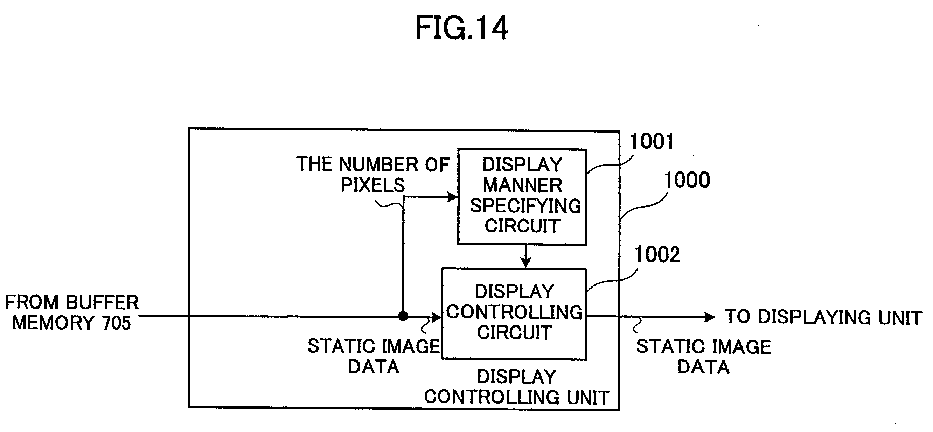

Referring to FIG. 14 of the drawings, there is shown a partial diagram view of a sixth preferred embodiment of the image processing apparatus according to the present invention.

In this embodiment, the static image processing unit 702 comprises the constitutional elements same as those of the fourth embodiment of the static image processing unit 702 shown in FIG. 11 except for the display controlling unit 706, and a display controlling unit 1000 which is replaced as the display controlling unit 706 of the fourth embodiment of the static image processing unit 702 shown in FIG. 11. The description of the same constitutional elements will be thus omitted from the following description.

As shown in FIG. 14, the display controlling unit 1000 comprises a display manner specifying circuit 1001 and a display controlling circuit 1002.

The display manner specifying circuit 1001 of the display controlling unit 1000 is electrically connected to the buffer memory 705 of the static image processing unit 702. The display manner specifying circuit 1001 of the display controlling unit 1000 is adapted to derive the display information from the group information transmitted from the buffer memory 705 to specify a displaying order, an image size and a display position on the basis of the display information.

The displaying order is defined as an order for displaying the static images in each of the image groups on the display screen. The image size is defined as an image size for displaying each of the static images in each of the image groups on the display screen of the displaying unit. The display position is defined as positions at which the static images in each of the image groups are located on the display screen of the displaying unit.

The display controlling circuit 1002 of the display controlling unit 1000 is electrically connected to the display manner specifying circuit 1001 and the buffer memory 705 of the static image processing unit 702. The display controlling circuit 1002 of the display controlling unit 1000 is adapted to control the displaying unit to display the static images of the selected image group on the display screen of the displaying unit on the basis of the display manner specified by the display manner specifying circuit 1001 of the display controlling unit 1000 when one of the image groups is selected from among the image list by the user.

The operation of the image processing apparatus according to the present invention thus constructed will be described in detail hereinlater.

In this embodiment, the number of horizontal pixels and the number of vertical pixels are derived from the group information transmitted from the buffer memory 705 of the static image processing unit 702 by the display manner specifying circuit 1001 of the display controlling unit 1000. The display manner is determined by the display manner specifying circuit 1001 of the display controlling unit 1000 on the basis of a screen size of the display screen of the displaying unit and the image size of the static images to be displayed.

The screen size of the display screen of the displaying unit is indicative of the number of horizontal and vertical pixels of the display screen. The image size of the static image is also indicative of the number of horizontal and vertical pixels. The image size and the screen size are compared with each other to specify the display manner for displaying the static images on the display screen having the restricted screen size by the display manner specifying circuit 1001 of the display controlling unit 1000.

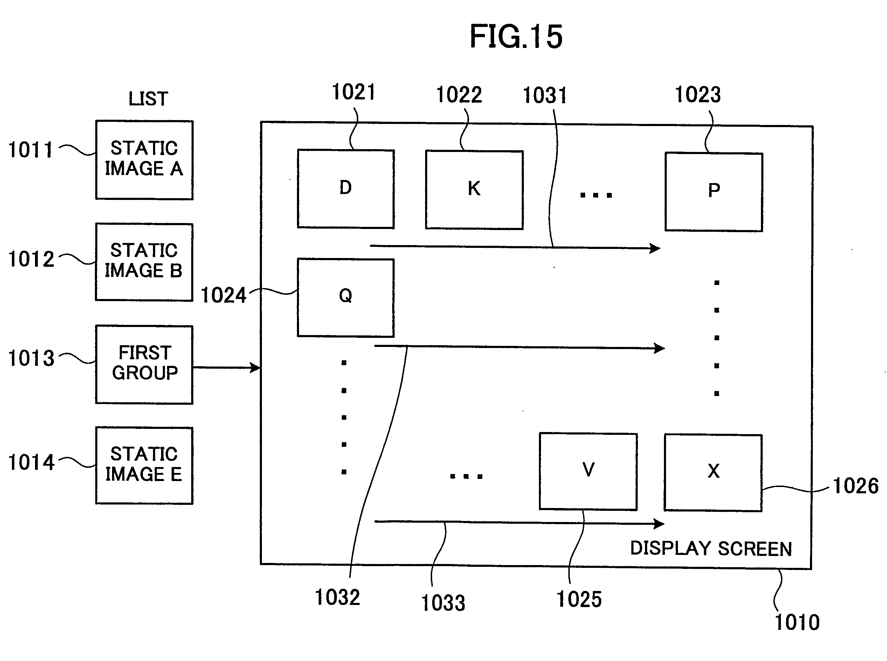

Referring to FIG. 15 of the drawings, there is shown an example of the image list in this embodiment. The image list displayed on the display screen of the displaying unit includes a static image 1011 having an image identifier "A", a static image 1012 having an image identifier "B", a first image group 1013, and a static image 1014 having an image identifier "E". The first image group 1013 includes a plurality of static images 1021, 1022, 1023, 1024, 1025 and 1026.

When the first image group 1013 is selected by the user, the display manner is determined by comparing the number of horizontal and vertical pixels of each of the static images 1021, 1022, 1023, 1024, 1025 and 1026 in the selected first image group with the number of horizontal and vertical pixels of the display screen of the displaying unit in the display manner specifying circuit 1001 of the display controlling unit 1000.

When the display manner specifying circuit 1001 of the display controlling unit 1000 is judged that the size of the display screen of the displaying unit is enough to display all of the static images in the selected image group, the display positions for all of the static images in the selected image group are determined by the display manner specifying circuit 1001 of the display controlling unit 1000 so as to display all of the static images 1021, 1022, 1023, 1024, 1025 and 1026 in the selected first image group on a single display screen 1010 of the displaying unit as shown in FIG. 15.

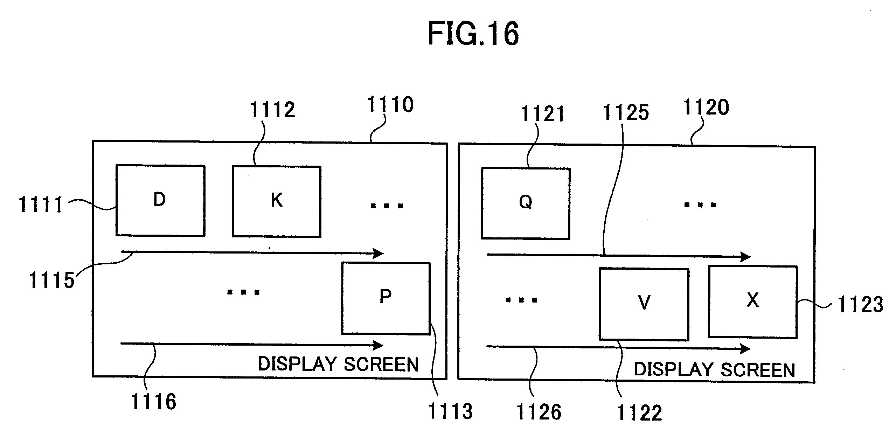

When, on the other hand, the display manner specifying circuit 1001 of the display controlling unit 1000 is judged that the size of the display screen of the displaying unit is too small to display all of the static images in the selected image group, the display positions for of the static images in the selected image group are determined by the display manner specifying circuit 1001 of the display controlling unit 1000 so as to display a part of the static images 1111, 1112, ..., and 1113 in the selected first image group on a first page of the display screen 1110 of the displaying unit and further display the remains of the static images 1121, ..., 1122 and 1123 in the selected first image group on a second page of the display screen 1120 of the displaying unit, as shown in FIG. 16.

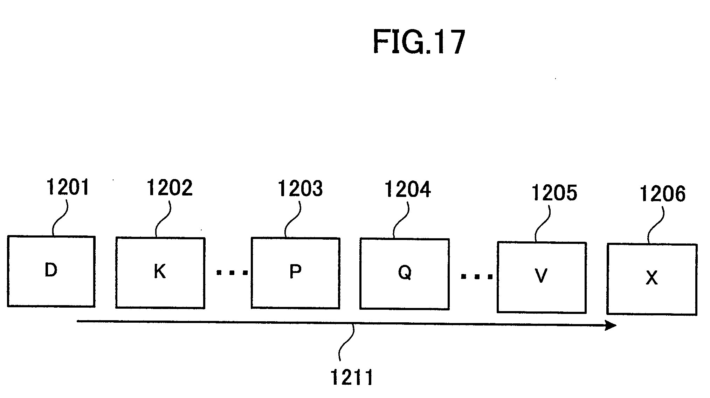

When the display manner specifying circuit 1001 of the display controlling unit 1000 is judged, on the basis of the size of the display screen of the displaying unit and the static images in the selected image group, that the size of the display screen is just in size for displaying a single static image, the display manner is determined by the display manner specifying circuit 1001 of the display controlling unit 1000 so as to display the static images 1201, 1202, ..., 1203, 1204, ..., 1205 and 1206 in the selected first group in turn as indicated by an arrow 1211 in FIG. 17 every pages on the display screen of the displaying unit.

The display manner is then transmitted to the display controlling circuit 1002 of the display controlling unit 1000. The static images in the selected first image group thus displayed on the display screen of the displaying unit in accordance with the display manner by the display controlling circuit 1002 of the display controlling unit 1000.

It is easy for the above embodiment of the image processing apparatus according to the present invention to control the displaying unit on the basis of a size of its display screen and the image size to display a plurality of images as an album together on a single large display screen of the displaying unit or to display a plurality of images one by one in turn as slide shows on a single small display screen of the displaying unit.

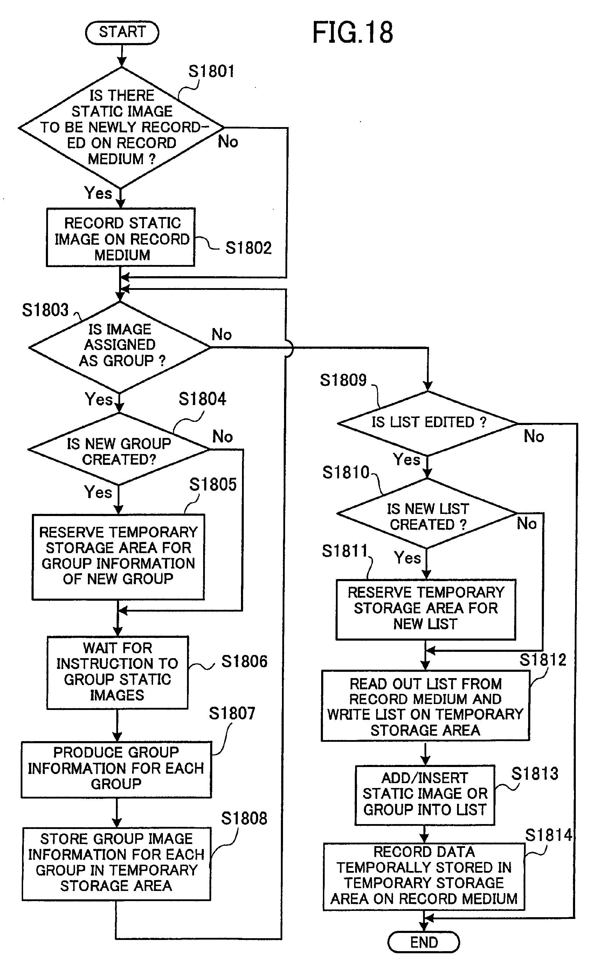

Referring now to FIG. 18 of the drawings, there is shown an overall outline flowchart of the process in a seventh preferred embodiment of the image processing method according to the present invention.

As shown in FIG. 18, the image processing method according to the present invention comprises the steps S1801 to S1814. In the first step S1801, the judgment is made whether there is a new static image to be recorded on the record medium or not. When the answer in the step S1801 is in the affirmative "YES", i.e., there is a new static image to be recorded on the record medium, the step S1801 proceeds to the step S1802 wherein the new static image is recorded on the record medium. Then, the step S1802 proceeds to the step S1803. When, on the other hand, the answer in the step S1801 is in the negative "NO", i.e., there is no new static image to be recorded on the record medium, the step S1802 is bypassed and the step S1801 proceeds to the step S1803.

In the step S1803, the judgment is made whether the static images would be assigned as an image group or not. Here, the image group includes at least two static images. When the answer in the step S1803 is in the affirmative "YES", i.e., the static images would be assigned as an image group, the step S1803 proceeds to the step S1804 wherein the judgment is made whether a new image group would be created or not. When, on the other hand, the answer in the step S1804 is in the negative "NO", i.e., no static image would be assigned as an image group, the step S1803 proceeds to the step S1809.

When the answer in the step S1804 is in the affirmative "YES", i.e., a new image group would be created, the step S1804 proceeds to the step S1805, wherein the temporal storage area is reserved for storing therein the group information on the new image group. The step S1805 then proceeds to the step S1806. When, on the other hand, the answer in the step S1804, is in the negative "NO", i.e., no new image group would be created, the steps S1805 is bypassed and the step S1804 proceeds to the step S1806.

In the step S1806, the instruction to group the static images is accepted. In the following step S1807, the group information for each of the image groups is produced. Here, the group information for each of the image groups includes the group identifier of the each image group and the image identifiers of a plurality of static images, which are recorded on the record medium and specified as the each image group. In the following step S1808, the group information for each of the image groups is then temporally stored in the temporal storage area. The step S1808 proceeds to the step S1803. As described above, when no static image would be assigned as an image group, the steps S1803 proceeds to the step S1809.

In the step S1809, the judgment is made whether the image list would be edited or not. When the answer in the step S1809 is in the affirmative "YES", i.e., the image list would be edited, the step S1809 goes to the step S1810. When, on the other hand, the answer in the step S1809 is in the negative "NO", i.e., no image list would be edited, this process is terminated.

In the step S1810, the judgment is made whether a new image list would be created or not. When the answer in the step S1810 is in the affirmative "YES", i.e., the new image list would be created, the step S1810 goes to the step S1811. When, on the other hand, the answer in the step S1810 is in the negative "NO", i.e., no new image list would be created, the step S1811 is bypassed and the step S1810 proceeds to the step S1812.

In the step S1811, the temporal storage area is reserved for storing therein the new image list. The step S1811 then proceeds to the step S1812. In the step S1812, the image list previously recorded on the record medium is read out from the record medium and written onto the temporal storage area. The image list may be displayed on the display screen of the displaying unit, accordingly the user can interactively add and/or insert the static images and/or the image groups into the image list.

The step S1812 proceeds to the step S1813, wherein the static images and/or the image groups are inserted and/or added into the image list. Here, the image list lists the image identifiers and the group identifiers in order to refer the static images recorded on the record medium. In the following step S1814, the data on the image list thus edited in the temporal storage area is then recorded on the record medium. The group information produced in the step S1807 and temporally stored in the temporal storage area in the step S1808 is further recorded on the record medium. The process is thus terminated.

It will be understood from the above description of the seventh embodiment that the image processing method according to the present invention has an advantage in making good use of a narrow storage capacity of the record medium, because of the fact that it is unnecessary to record new composite images on the record medium. Furthermore, in the image processing method according to the present invention one of the static images and the image groups can be selected from the image list to be displayed on a single display screen without restraint whether a single image is displayed on a single display screen or a plurality of images are displayed together on a single display screen.

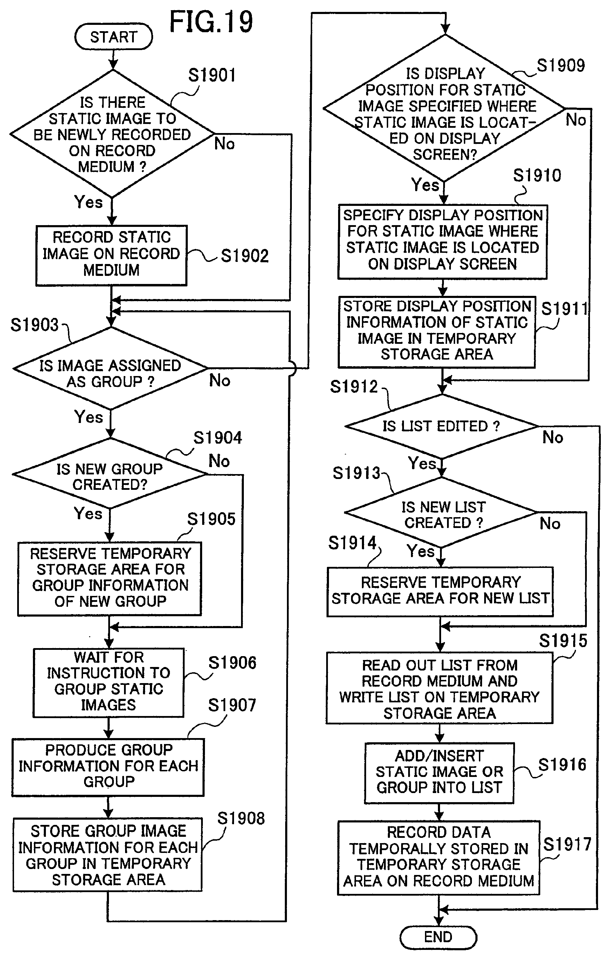

Referring to FIG. 19 of the drawings, there is shown an overall outline flowchart of the process in an eighth preferred embodiment of the image processing method according to the present invention.

In this embodiment, the static image processing method shown in FIG. 19 comprises the steps S1901 to S1917. The operation of the steps S1901 to S1908 and S1912 to S1917 is the same as that of the steps S1801 to S1808 and S1809 to S1814, respectively, in the seventh embodiment of the static image processing method shown in FIG. 18, which have already described above. The description of these steps S1901 to S1908 and S1912 to S1917 in FIG. 19 will be thus omitted from the following description.

In the step S1909 after the step S1903 wherein the group information for each of the image groups is temporally stored in the temporal storage area, the judgment is made whether the display positions for the static images in the image group would be specified where the static images are located on the display screen of the displaying unit or not. When the answer in the step S1909 is in the affirmative "YES", i.e., the display positions for the static images in the image group would be specified where the static images are located on the display screen of the displaying unit, the step S1909 proceeds to the step S1910.

When, on the other hand, the answer in the step S1909 is in the negative "NO", i.e., the display positions for the static images in the image group would not be specified, the steps S1910 and S1911 are bypassed and the step S1909 goes to the step S1912. In the step S1910, the display position of the static images in the image group are specified where the static images are located on the display screen of the displaying unit. In the following step S1911, the position information on the display positions of the static images in the image group are produced and temporally stored in the temporary storage area.

It will be understood from the above description of the eighth embodiment that the image processing method according to the present invention has an advantage in making good use of a narrow storage capacity of the record medium when a plurality of images are displayed at predetermined positions on a single display screen of the displaying unit, because of the fact that in the image processing method according to the present invention, it is possible to determine the position information on the positions of a plurality of images, having a small volume, to record the position information and the images, but there is no need to record new composite images on the record medium. Furthermore, the image processing apparatus according to the present invention is operable to then read out the images from the record medium to display the plurality of images at the positions on a single display screen of the displaying unit, thereby reducing the needed capacity of the record medium. Furthermore, it is easy to change the positions for displaying the images on the display screen of the displaying unit.

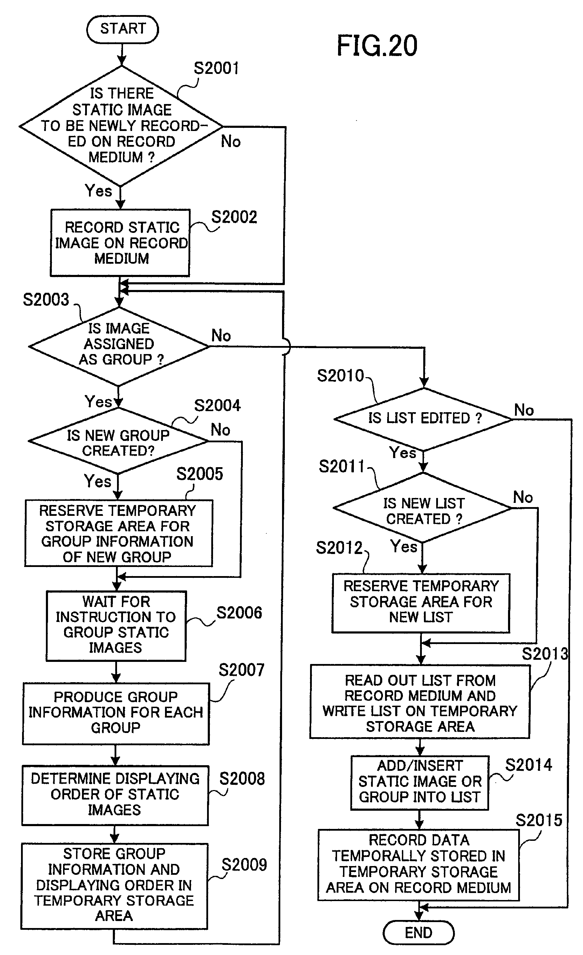

Referring now to FIG. 20 of the drawings, there is shown an overall outline flowchart of the process in a ninth preferred embodiment of the image processing method according to the present invention.

In this embodiment, the static image processing method shown in FIG. 20 comprises the steps S2001 to S2015. The operation of the steps S2001 to S2007 and S2010 to S2015 is the same as that of the steps S1801 to S1807 and S1809 to S1814, respectively, in the seventh embodiment of the static image processing method shown in FIG. 18, which have already described above. The description of these steps S2001 to S2007 and S2010 to S2015 in FIG. 20 will be thus omitted from the following description.

After the step S2007 wherein the static images is sorted for the image group to produce the group image information, in the step S2008 wherein the displaying order of the static images is determined. In the following step S2009, the display information on the displaying order is produced and the group information including the display information is temporally stored in the temporary storage area. The step S2009 proceeds to the step S2003.

In another embodiment, in the step S2008, the image size for displaying the static image for each of the static images is determined. In the following step S2009, the display information on the image size is produced and the group information including the display information is temporally stored in the temporary storage area.

In further embodiment, the display information may include both the displaying order and the image size.

In the above step S2008, the display information including the image size, i.e., the number of horizontal pixels 513 and the number of vertical pixels 514 for each of the static images in the image group and the displaying order 512 for the static images in the image group are associated with the image identifiers 511 of the corresponding static images in the group image information as shown in FIG. 9.

In the above step S2009, the group information including the image identifiers, the displaying order, and the image sizes are then temporally stored in the temporary storage area.

It is easy for the above embodiment of the image processing method according to the present invention to control the displaying unit on the basis of a size of its display screen and the image size to display a plurality of images as an album together on a single large display screen of the displaying unit or to display a plurality of images one by one in turn as slide shows on a single small display screen of the displaying unit.

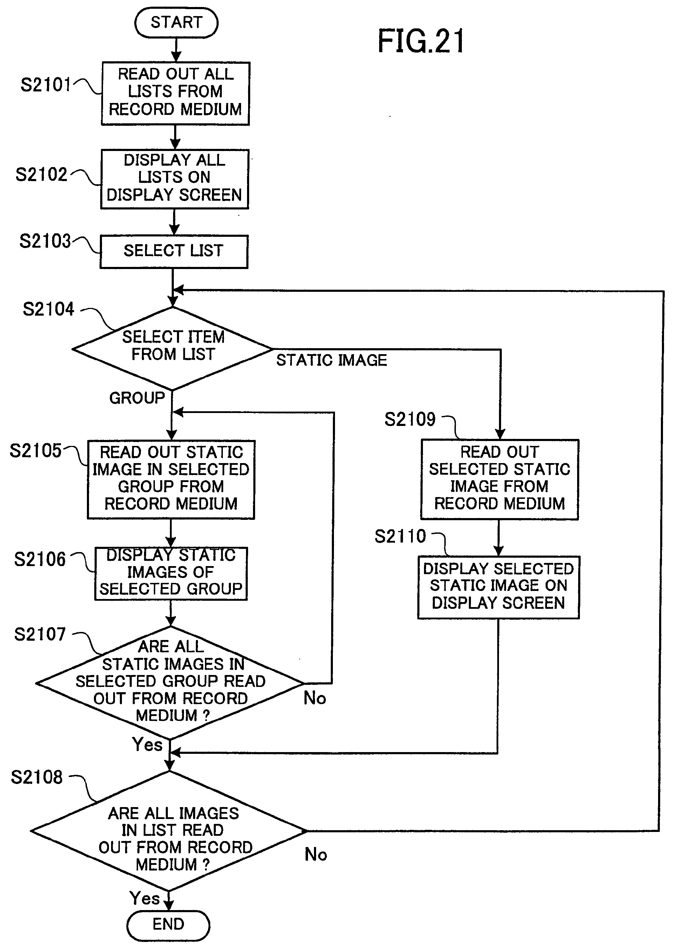

Referring now to FIG. 21 of the drawings, there is shown an overall outline flowchart of the process in a tenth preferred embodiment of the image processing method according to the present invention.

As shown in FIG. 21, the image processing method according to the present invention comprises the steps S2101 to S2110. In this embodiment, the record medium has a plurality of static images, a plurality of image lists and the group information previously recorded thereon. The image list and the group information are the same as those of the first embodiment of the image processing apparatus. Therefore, the description of the same constitutional elements will be thus omitted from the following description.

In the first step S2101, all of the image lists and the group information are read out from the record medium. Here, the image lists and the group information are the same as those of the seventh embodiment of the image processing method according to the present invention. Therefore, the detailed description of the same constitutional elements will be thus omitted from the following description.

In the following step S2102, all of the image lists are displayed on the display screen of the displaying unit. In the following step S2103, a single of the image list is selected. In the following step S2104, an item is selected from among the image list selected in the step S2103. Here, the item in the image list includes the image identifiers of the static images and the group identifiers of the groups.

When the group is selected as the item in the step S2104, the step S2104 proceeds to the step S2105. When, on the other hand, the static image is selected as the item in the step S2104, the step S2104 goes to the step S2109. In the step S2105, the static images in the group selected in the step S2104 are read out from the record medium. The step then S2105 proceeds to the step S2106 wherein the read out static images in the selected image group are displayed on the display screen of the displaying unit. In the following step S2107, the judgment is made whether all of the static images in the selected image group have been already read out from the record medium or not.

When the answer in the step S2107 is in the affirmative "YES", i.e., all of the static images in the selected image group have been already read out from the record medium, the step S2107 proceeds to the step S2108. When, on the other hand, the answer in the step S2107 is in the negative "NO", i.e., all of the static images in the selected image group hasn't been read out from the record medium yet, the step S2107 returns to the step S2105.

In the step S2108, the judgment is made whether all of the static images and image groups in the image list have been already read out from the record medium or not. When the answer in the step S2108 is in the affirmative "YES", i.e., all of the static images and image groups in the image list has been already read out from the record medium, the process is terminated. When, on the other hand, the answer in the step S2108 is in the negative "NO", i.e., all of the static images and image groups hasn't been read out from the record medium yet, the step S2108 returns to the step S2104.

In the step S2109, the static image selected from the image list in the step S2104 are read out from the record medium. In the following step S2110, the read out static image is displayed on the display screen of the displaying unit. The step S2110 then goes to the step S2108.

It will be understood from the above description of the above embodiment that the image processing method according to the present invention has an advantage in making good use of a narrow storage capacity of the record medium, because of the fact that it is unnecessary to previously record composite images on the record medium. Furthermore, in the image processing method according to the present invention one of the static images and the image groups can be selected from the image list to be displayed on a single display screen without restraint whether a single image is displayed on a single display screen or a plurality of images are displayed together on a single display screen.

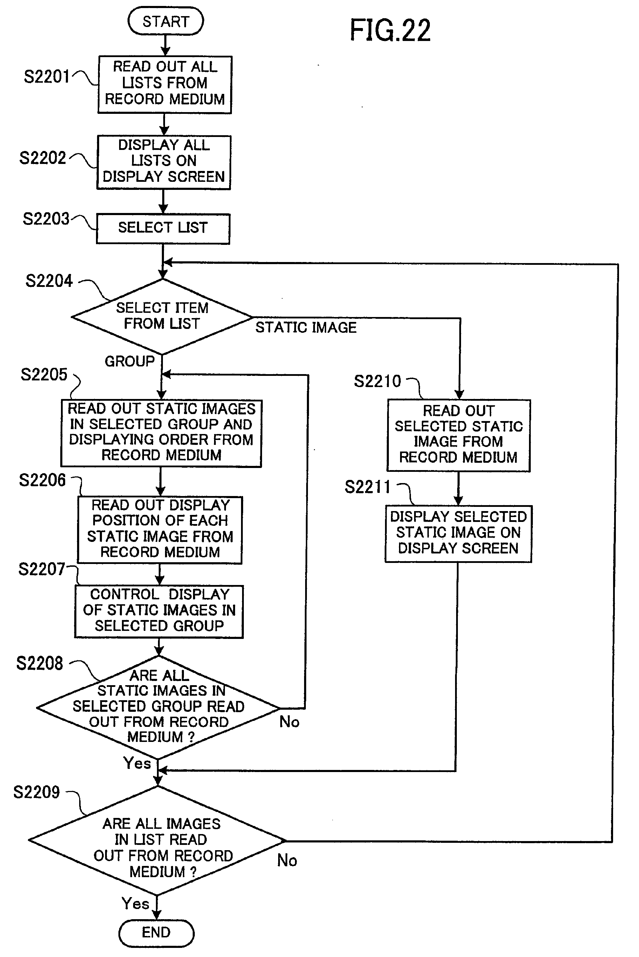

Referring now to FIG. 22 of the drawings, there is shown an overall outline flowchart of the process in an eleventh preferred embodiment of the image processing method according to the present invention.

In this embodiment, the static image processing method shown in FIG. 22 comprises the steps S2201 to S2211. The operation of the steps S2201 to S2204 and S2208 to S2211 is the same as that of the steps S2101 to S2104 and S2107 to S2110, respectively, in the tenth embodiment of the static image processing method shown in FIG. 21, which have already described above. The description of these steps S2201 to S2204 and S2208 to S2211 in FIG. 22 will be thus omitted from the following description.

When the group is selected as the item in the step S2204 of selecting an item from among the image list selected in the step S2203, the step S2204 goes to the step S2205. In the step S2205, a plurality of static images in the group selected in the step S2204 and the displaying order for displaying the corresponding static images are read out from the record medium. In the following step S2206, the display position information is read out from the record medium. In the following step S2207, the static images in the image group are displayed on the display screen of the displaying unit in accordance with the displaying order and the display position information.

It will be understood from the above description of the above embodiment that the image processing method according to the present invention has an advantage in making good use of a narrow storage capacity of the record medium when a plurality of images are displayed at predetermined positions on a single display screen of the displaying unit, because of the fact that in the image processing method according to the present invention, it is possible to determine the position information on the positions of a plurality of images, having a small volume, to record the position information and the images, but there is no need to record new composite images on the record medium. Furthermore, the image processing apparatus according to the present invention is operable to then read out the images from the record medium to display the plurality of images at the positions on a single display screen of the displaying unit, thereby reducing the needed capacity of the record medium. Furthermore, it is easy to change the positions for displaying the images on the display screen of the displaying unit.

Moreover, even when the composite image is displayed on the display screen of the displaying unit and the original images are further displayed on the display screen of the displaying unit, there is no need to read out the original images from the record medium once more.

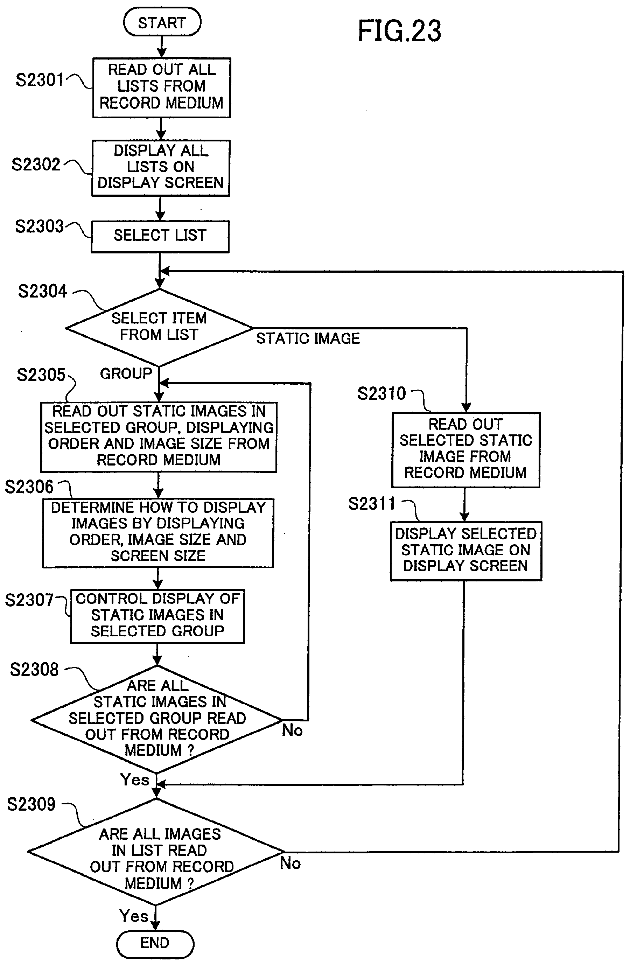

Referring now to FIG. 23 of the drawings, there is shown an overall outline flowchart of the process in a twelfth preferred embodiment of the image processing method according to the present invention.

In this embodiment, the static image processing method shown in FIG. 23 comprises the steps S2301 to S2311. The operation of the steps S2301 to S2304 and S2308 to S2311 is the same as that of the steps S2101 to S2104 and S2107 to S2110, respectively, in the tenth embodiment of the static image processing method shown in FIG. 21, which have already described above. The description of these steps S2301 to S2304 and S2308 to S2311 in FIG. 23 will be thus omitted from the following description.

When the group is selected as the item in the step S2304 of selecting an item from among the image list selected in the step S2303, the step S2304 goes to the step S2305. In the step S2305, a plurality of static images in the group selected in the step S2304, the displaying order for displaying the corresponding static images, and the image size are read out from the record medium. In the following step S2306, the display manner is determined on the basis of the displaying order and the display size of the static images in the image group and the size of the display screen of the displaying unit.

In the following step S2307, the static images in the image group are displayed on the display screen of the displaying unit in accordance with the display manner determined in the step S2306.

In accordance with a first display manner determined in the step S2306, a plurality of the static images may be displayed together as an album on a single display screen. In accordance with a second display manner determined in the step S2306, a plurality of the static images may be respectively displayed in turn as slide shows on a single display screen. In accordance with a third display manner determined in the step S2306, a message for announcing "no static image can be displayed on the display screen" is displayed on the display screen of the displaying unit when the size of the display screen of the displaying unit is smaller than that of the static image.

It is easy for the above embodiment of the image processing method according to the present invention to control the displaying unit on the basis of a size of its display screen and the image size to display a plurality of images as an album together on a single large display screen of the displaying unit or to display a plurality of images one by one in turn as slide shows on a single small display screen of the displaying unit.

In the above embodiments, the image to be processed is a static image, but not limited to, may be a motion picture, such as an animation. The display position is defined as the matrix arrangement designated by a horizontal position and a vertical position in the above embodiment, but not limited to, may be defined as a vertical line arrangement, a horizontal line arrangement, a loop arrangement, a random arrangement, and so on.

Furthermore, the above embodiments of the image processing method according to the present invention may be performed by executing a computer program recorded on a computer usable storage medium having computer readable code embodied therein for processing a plurality of images. The computer may be a microcomputer, the other computer, a device comprising a microcomputer, or the like.

It will be apparent to those skilled in the art and it is contemplated that variations and/or changes in the embodiments illustrated and described herein may be without departure from the present invention. Accordingly, it is intended that the foregoing description is illustrative only, not limiting, and that the true spirit and scope of the present invention will be determined by the appended claims.

## Claims

1. An image processing apparatus (102) for processing a plurality of images recorded on a record medium (103) comprising:
image grouping means (101, 107; 300; 500) for allowing a user to specify a plurality of said images to group the specified images into an image group and to designate each of said images as an image identifier;
group designating means (107; 300; 500) for designating each of said image groups as a group identifier to produce group image information including said image identifiers of said grouped images for each of said group identifiers of said image groups;
list creating means (104) for creating an image list listing said image identifiers and said group identifiers; and
recording means (106) for recording said image list and said group image information on said record medium (103).

2. The image processing apparatus (102) as set forth in claim 1, wherein said group designating means (300) is operated to allow said user to specify a display position at which each of said images is located on a display screen to produce position information on said display position for each of said image identifiers of said images in each of said image groups, said position information being associated with said group image information to produce group information, and said recording means (106) being operated to record said group information on said record medium (103).

3. The image processing apparatus (102) as set forth in claim 1, wherein said group designating means (500) is operated to allow said user to specify a displaying order for displaying said images in each of said image groups on a display screen, and to produce display information on said displaying order designated for said image identifiers of said images in each of said image groups, said display information being associated with said group image information to produce group information, and said recording means (106) being operated to record said group image information including said display information on said record medium (103).

4. The image processing apparatus (102) as set forth in claim 1, wherein said group designating means (500) is operated to allow said user to specify an image size for displaying each of said images in each of said image groups on a display screen to produce display information on said display size designated for said image identifiers of said images in each of said image groups, said display information being associated with said group image information to produce group information, and said recording means (106) being operated to record said group image information including said display information on said record medium (103).

5. An image processing apparatus (702) for processing a plurality of images recorded on a record medium (701) to display said image on a display screen of a displaying unit, said image having a predetermined image identifier, a plurality of said images being assigned as image groups each having a predetermined group identifier, said record medium (701) having an image list including said image identifiers and said group identifiers, and group image information including said image identifiers of said grouped images for each of said group identifiers of said image groups, said image processing apparatus (702) comprising:
image reading out means (707) for reading out said images and said group image information from said record medium (701),
display controlling means (706; 900; 1000) for controlling said displaying unit to display said image list on said display screen of said displaying unit; and
inputting means (703, 704) for allowing a user to select at least one of said image groups and images from among said image list displayed on said display screen of said displaying unit; wherein said display controlling means (706; 900; 1000) is operated to control said displaying unit on the basis of said group image information to display the images in the image group selected by said user and the images selected by said user on said display screen of said displaying unit.

6. The image processing apparatus (702) as set forth in claim 5, wherein said group image information has display position information on positions at which said images in each of said image groups are located on a display screen, and said display controlling means (900) being operated to control said display unit to display said images of the selected image group located at said positions on said display screen on the basis of said display position information when one of said image groups is selected from among said image list by said inputting means (703, 704).

7. The image processing apparatus (702) as set forth in claim 5, wherein said group image information has display information on a displaying order for displaying each of said images in each of said image groups on a display screen, and said display controlling means (1000) being operated to control said display unit to display said images of the selected image group in said displaying order on said display screen on the basis of said display information when one of said image groups is selected from among said image list by said inputting means (703, 704).

8. The image processing apparatus (702) as set forth in claim 5, wherein said group image information has display information on an image size for displaying each of said images in each of said image groups on a display screen, and said display controlling means (1000) being operated to control said display unit to display said images of the selected image group in said image size on said display screen on the basis of said display information and a size of said display screen of said displaying unit when one of said image groups is selected from among said image list by said inputting means (703,704).

9. An image processing method of processing a plurality of images recorded on a record medium comprising the steps of:
(a) allowing a user to specify a plurality of said images to group the specified images into an image group and to designate each of said images as an image identifier;
(b) designating each of said image groups as a group identifier to produce group image information including said image identifiers of said grouped images for each of said group identifiers of said image groups;
(c) creating an image list listing said image identifiers and said group identifiers; and
(d) recording said image list and said group image information on said record medium.

10. The image processing method as set forth in claim 9, further comprising the step of allowing said user to specify a display position at which each of said images is located on a display screen to produce position information on said display position for each of said image identifiers of said images in each of said image groups, and wherein the step (d) has the step of recording said group image information including said position information on said record medium.

11. The image processing method as set forth in claim 9, further comprising the steps of: allowing said user to specify a displaying order for displaying said images in each of said image groups on a display screen; and producing display information on said displaying order designated for said image identifiers of said images in each of said image groups, and wherein the step (d) has the step of recording said group image information including said display information on said record medium.

12. The image processing method as set forth in claim 9, further comprising the step of allowing said user to specify an image size for displaying each of said images in each of said image groups on a display screen to produce display information on said display size designated for said image identifiers of said images in each of said image groups, and wherein the step (d) has the step of recording said group image information including said display information on said record medium.

13. An image processing method of processing a plurality of images recorded on a record medium to display said image on a display screen of a displaying unit, said image having a predetermined image identifier, a plurality of said images being assigned as image groups each having a predetermined group identifier, wherein said image processing method comprises the steps of:
(a) preparing said record medium having a plurality of said images, said image list, and group image information including said image identifiers of said grouped images for each of said group identifiers of said image groups;
(b) reading out said image list and said group image information from said record medium;
(c) displaying said image list on said display screen of said displaying unit;
(d) allowing a user to select at least one of said image groups and images from among said image list displayed on said display screen of said displaying unit;
(e) reading out the images selected in the step (d) and said images of the image group selected in the step (d) from said record medium; and
(f) controlling said displaying unit on the basis of said group image information to display said images read out in the step (e) on said display screen of said displaying unit.

14. The image processing method as set forth in claim 13, wherein said group image information has display position information on positions at which said images in each of said image groups located on a display screen, and the step (f) has the step of controlling said display unit to display said images of the selected image group located at said positions on said display screen on the basis of said display position information when one of said image groups is selected from among said image list in the step (d).

15. The image processing method as set forth in claim 13, wherein said group image information has display information on a displaying order for displaying said images in each of said image groups on a display screen, and the step (f) has the step of controlling said display unit to display said images of the selected image group in said displaying order on said display screen on the basis of said display information when one of said image groups is selected from among said image list in the step (d).

16. The image processing method as set forth in claim 13, wherein said group image information has display information on an image size for displaying said images in each of said image groups on a display screen, and the step (f) has the step of controlling said display unit to display said images of the selected image group in said image size on said display screen on the basis of said display information and a size of said display screen of said displaying unit when one of said image groups is selected from among said image list in the step (d).

17. A computer program product comprising a computer usable storage medium having computer readable code embodied therein for processing a plurality of images recorded on a record medium, wherein said computer readable code comprising:
a first program product code for allowing a user to specify a plurality of said images to group the specified images into an image group and to designate each of said images as an image identifier;
a second program product code for designating each of said image groups as a group identifier to produce group image information including said image identifiers of said grouped images for each of said group identifiers of said image groups;
a third program product code for creating an image list listing said image identifiers and said group identifiers; and
a fourth program product code for recording said image list and said group image information on said record medium.

18. The computer program product as set forth in claim 17, wherein said computer readable code further comprising a fifth program product code for allowing said user to specify a display position at which each of said images is located on a display screen to produce position information on said display position for each of said image identifiers of said images in each of said image groups, and wherein said fourth program product code has the program product code for recording said group image information including said position information on said record medium.

19. The computer program product as set forth in claim 17, wherein said computer readable code further comprising a sixth program product code for allowing said user to specify a displaying order for displaying said images in each of said image groups on a display screen to produce display information on said displaying order designated for said image identifiers of said images in each of said image groups, and wherein said fourth program product code has a program product code for recording said group image information including said display information on said record medium.

20. The computer program product as set forth in claim 17, wherein said computer readable code further comprising a sixth program product code for allowing said user to specify an image size for displaying said images in each of said image groups on a display screen to produce display information on said image size designated for said image identifiers of said images in each of said image groups, and wherein said fourth program product code has a program product code for recording said group image information including said display information on said record medium.

21. A computer program product comprising a computer usable storage medium having computer readable code embodied therein for processing a plurality of images recorded on a record medium, said record medium having a plurality of said images, said image list, and group image information including said image identifiers of said grouped images for each of said group identifiers of said image groups, wherein said computer readable code comprising:
a first program product code for reading out said image list and said group image information from said record medium;
a second program product code for displaying said image list on said display screen of said displaying unit;
a third program product code for allowing a user to select at least one of said image groups and images from among said image list displayed on said display screen of said displaying unit;
a fourth program product code for reading out the images selected by said third program product code and said images of the image group selected by said third program product code from said record medium; and
a fifth program product code for controlling said displaying unit on the basis of said group image information to display said images read out by said fourth program product code on said display screen of said displaying unit.

22. The computer program product as set forth in claim 21, wherein said group image information has display position information on positions at which said images in each of said image groups are located on a display screen, and said fifth program product code has a sixth program product code for displaying said images of the selected image group located at said positions on said display screen on the basis of said display position information when one of said image groups is selected from among said image list by said fourth program product code.

23. The computer program product as set forth in claim 21, wherein said group image information has display information on a displaying order for displaying said images in each of said image groups on a display screen, and said fifth program product code has a sixth program product code for displaying said images of the selected image group in said displaying order on said display screen on the basis of said display information when one of said image groups is selected from among said image list by said fourth program product code.

24. The computer program product as set forth in claim 21, wherein said group image information has display information on an image size for displaying said images in each of said image groups on a display screen, and said fifth program product code has a sixth program product code for displaying said images of the selected image group in said image size on said display screen on the basis of said display information and a size of said display screen of said displaying unit when one of said image groups is selected from among said image list by said fourth program product code.

25. The image processing apparatus as set forth in claim 1, wherein said image is a static image.

26. The image processing apparatus as set forth in claim 5, wherein said image is a static image.

27. The image processing method as set forth in claim 9, wherein said image is a static image.

28. The image processing method as set forth in claim 13, wherein said image is a static image.

29. The computer program product as set forth in claim 17, wherein said image is a static image.

30. The computer program product as set forth in claim 21, wherein said image is a static image.
